# FASCICULE DE BREVET EUROPEEN

(11) **EP 2 533 632 B1**
(45) Date de publication et mention de la délivrance du brevet: **30.10.2013**
(21) Numéro de dépôt: 11707463.3
(22) Date de dépôt: 07.02.2011
(51) Int. Cl.: A01N 65/00, A01N 31/16, A01N 65/22, A01N 65/28

(54) **PROCÉDÉ DE TRAITEMENT ANTIGERMINATIF ET ÉVENTUELLEMENT FONGICIDE DE BULBES ET/OU TUBERCULES UTILISANT L'HUILE DE GIROFLE ET L'HUILE DE MENTHE**
BEHANDLUNG VON ZWIEBELN UND/ODER WURZELKNOLLEN MIT NELKENÖL UND PFEFFERMINZÖL ZUR VERHINDERUNG DER KEIMUNG UND ZUM SCHUTZ VOR BEFALL DURCH PILZE
TREATMENT OF BULBS AND/OR TUBERS WITH CLOVE OIL AND SPEARMINT OIL TO PREVENT SPROUTING AND ATTACK BY FUNGI

(30) Priorité: 08.02.2010 FR 1050863
(43) Date de publication de la demande: 19.12.2012
(73) Titulaire: Xeda International, 13670 Saint Andiol (FR)
(72) Inventeur: SARDO, Alberto, F-13160 Chateaurenard (FR)
(74) Mandataire: Domenego, Bertrand
(86) Numéro de dépôt international: PCT/FR2011/050239
(87) Numéro de publication internationale: WO 2011/095751

(56) Documents cités:
- EP-A1- 0 719 499
- EP-A1- 1 790 225
- EP-B1- 1 052 905
- WO-A1-00/32063
- FR-A1- 2 863 825
- FR-A1- 2 923 355
- FR-A1- 2 923 356
- US-A- 5 811 372
- PACE INTERNATIONAL: "Biox-COMBO MATERIAL SAFETY DATA SHEET", INTERNET CITATION, 12 janvier 2008 (2008-01-12), XP007914193, Extrait de l'Internet: URL:http://www.jmcvr.com/pdf%20files/Biox- Combo%20MSDS.pdf [extrait le 2010-07-29]
- Pace International, LLC: "Biox -15EC & Biox -40EC", INTERNET CITATION, 1 janvier 2009 (2009-01-01), XP007914183, Extrait de l'Internet: URL:http://www.paceint.com/fabsheets/veget ables/Specialty/Biox-ECWebsiteBrochure.pdf [extrait le 2010-07-28]
- Pace International, LLC: "Biox -COMBO Liquid CIPC/Clove Oil Combination Potato Sprout Inhibitor by Thermofogging", INTERNET CITATION, 1 janvier 2009 (2009-01-01), XP007914185, Extrait de l'Internet: URL:http://www.paceint.com/fabsheets/veget ables/Specialty/BioxCOMBO-Pot.pdf [extrait le 2010-07-28]
- PACE INTERNATIONAL: "Biox-M", INTERNET CITATION, 6 janvier 2009 (2009-01-06), XP007914191, Extrait de l'Internet: URL:http://www.jmcvr.com/pdf%20files/Biox- M%20MSDS.pdf [extrait le 2010-07-28]
- PACE INTERNATIONAL, LLC: "Biox -C Organic Potato Sprout Inhibitor applied by Thermofogging", INTERNET CITATION, 1 janvier 2009 (2009-01-01), XP007914184, Extrait de l'Internet: URL:http://www.paceint.com/fabsheets/veget ables/Specialty/BioxC-Pot.pdf [extrait le 2010-07-28]
- KLEINKOPF GE ET AL: "Alternative sprout suppressants for stored potatoes", INTERNET CITATION, 23 janvier 2002 (2002-01-23), XP009136988, Extrait de l'Internet: URL:http://www.cals.uidaho.edu/potato/Rese arch&Extension/Topic/Storage/AlternativeSp routSuppressantsForStoredPotatoes-02.pdf [extrait le 2010-07-28]
- MARY JO FRAZIER ET AL: "Organic and Alternative Methods for Potato Sprout Control in Storage", INTERNET CITATION, 1 septembre 2004 (2004-09-01), XP007914188, Extrait de l'Internet: URL:http://www.kimberly.uidaho.edu/potatoe s/CIS1120.pdf [extrait le 2010-07-28]
- GALE E KLEINKOPF ET AL: "Sprout Inhibition in Storage: Current Status, New Chemistries and Natural Compounds", AMERICAN JOURNAL OF POTATO RESEARCH, THE ASSOCIATION, ORONO, ME, US, vol. 80, 1 mars 2003 (2003-03-01), pages 317-327, XP007914187, ISSN: 1099-209X
- CARLA C C R DE CARVALHO ET AL: "Carvone: Why and how should one bother to produce this terpene", FOOD CHEMISTRY, ELSEVIER LTD, NL LNKD- DOI:10.1016/J.FOODCHEM.2005.01.003, vol. 95, 1 avril 2006 (2006-04-01), pages 413-422, XP007914186, ISSN: 0308-8146 [extrait le 2005-03-05]

## Description

La présente invention concerne un procédé de traitement antigerminatif et éventuellement fongicide de bulbes et/ou tubercules comprenant l'application auxdits bulbes et/ou tubercules d'une combinaison d'huile de girofle et d'huile de menthe.

Ce procédé est notamment approprié au traitement des bulbes d'oignons et des tubercules de pommes de terre.

Après la récolte des pommes de terre ou autres tubercules, celles-ci sont conservées à des températures de l'ordre de 20 à 30 C pendant environ 10 jours afin de durcir leur couche péridermique ou "peau", puis progressivement refroidies jusqu'à leur température de conservation qui est d'environ 10°C, généralement entre 7 et 10°C.

Pendant les premier et deuxième mois suivant leur récolte, les tubercules restent à l'état de repos et présentent peu de tendance à la germination.

Cependant, avant la fin de cette période, les tubercules doivent être traitées chimiquement afin d'inhiber la germination qui serait responsable d'effets néfastes, tels qu'une perte de poids frais, une transformation de l'amidon en sucres et une diminution de la qualité des tubercules ainsi qu'une détérioration de leur apparence.

Les bulbes sont normalement gardés à des températures plus basses mais cela n'évite pas les risques de germination surtout lors de leur remise à température ambiante.

Les procédés de traitement anti-germinatifs les plus utilisés mettent en oeuvre des agents chimiques tels que le chloropopham (CIPC 1-méthyléthyl-3-chlorophénylcarbamate). Ces agents chimiques présentent des risques de toxicité élevés pour le consommateur, de sorte que les doses homologuées sont constamment réduites. De ce fait, la recherche s'est essentiellement portée sur la mise au point de produits alternatifs.

La demande FR 2 891 438 décrit un procédé de traitement anti-germinatif pour les bulbes et/ou tubercules par application d'une composition comprenant notamment de l'eugenol et/ou de l'huile de girofle. L'huile de girofle comprend de l'eugénol.

La demande FR 2 886 516 rapporte que l'eugénol présente une activité biocide contre les champignons et bactéries.

Les demandes FR 2 728 142, FR 2 923 356 et WO 00/32054 décrivent une composition pour le traitement anti-germinatifs de bulbes et/ou tubercules comprenant notamment de la L-carvone et/ou de l'huile de menthe. La L-carvone peut être obtenue à partir de sources naturelles, notamment à partir de menthe commune (*Mentha spicata*).

Les demandes EP 0 795 272, FR 2 923 355 et FR 2 923 356 décrivent un procédé de traitement fongicide pour les bulbes et/ou tubercules par application d'une composition comprenant notamment de la L-carvone.

Néanmoins, aucun produit alternatif ne présente une activité supérieure à celle du CIPC.

Un des objectifs de la présente invention est de fournir un procédé de traitement antigerminatif et éventuellement fongicide de bulbes et/ou tubercules ayant une activité supérieure à celle du CIPC tout en étant moins toxique que le CIPC.

Ainsi, l'invention a pour objet un procédé de traitement antigerminatif de bulbes et/ou tubercules comprenant les applications simultanées, séparées ou étalées dans le temps auxdits bulbes et/ou tubercules d'une combinaison:
- d'eugénol et/ou d'huile de girofle, et
- de L-carvone et/ou d'huile de menthe,
ladite combinaison comprenant :
- de 1% à 99%, en poids d'eugénol, et
- de 1% à 99% en poids de L-carvone.

L'invention repose sur la découverte inattendue que l'application combinée de l'eugénol et/ou de l'huile de girofle, et de la L-carvone et/ou de l'huile de menthe permet d'éviter plus efficacement la germination de bulbes et de tubercules et/ou décontamine mieux et/ou prévient mieux de la contamination qu'une composition comprenant de l'eugénol et/ou de l'huile de girofle, ou qu'une composition comprenant de la L-carvone et/ou de l'huile de menthe. Plus précisément, le procédé selon l'invention permet d'obtenir un effet antigerminatif synergique de ses constituants.

L'huile de girofle comprend généralement de 70 à 95% en poids d'eugénol, notamment de 80 à 92%, typiquement de 88 à 90% en poids d'eugénol. L'huile de menthe comprend généralement de 50 à 80% en poids de L-carvone, typiquement de l'ordre de 70%. Les proportions massiques adaptées correspondantes d'huile de menthe et d'huile de girofle peuvent facilement être calculées par l'homme du métier en tenant compte des teneurs en L-carvone et en eugénol de ces huiles.

L'huile de menthe seule et/ou la L-carvone, présente(nt) une activité anti-germinative très intéressante et comparable au produit de référence (le CIPC). L'huile de girofle seule a une activité anti-germinative inférieure à celle de l'huile de menthe ou du CIPC. Il n'était donc pas évident que la combinaison de l'huile de menthe et/ou de la L-carvone et de l'eugénol et/ou de l'huile de girofle permette d'atteindre un niveau d'activité antigerminative supérieure à celle du CIPC.

De plus, l'huile de girofle a une odeur désagréable et persistante, due à l'eugénol qu'elle contient, ce qui n'incitait pas à appliquer simultanément ou séparément de l'eugénol et/ou de l'huile de girofle, et de la L-carvone et/ou de l'huile de menthe.Or, les inventeurs ont découverts que l'odeur de l'huile de menthe, bien qu'elle soit plus douce que l'odeur de l'huile de girofle, couvre l'odeur de l'huile de girofle de façon tout à fait satisfaisante, notamment pour une concentration d'huile de menthe atteignant 10% du mélange.

Selon un mode de réalisation particulièrement avantageux, le procédé antigerminatif selon l'invention permet un traitement fongicide additionnel à l'effet antigerminatif. Ainsi, ledit procédé antigerminatif exerce un traitement fongicide additionnel. Cela est particulièrement intéressant car les spectres d'activité de l'eugénol (ou de l'huile de girofle) et de la L-carvone (ou de l'huile de menthe) permettent à eux deux de couvrir l'ensemble des champignons touchant généralement les bulbes et tubercules. L'huile de menthe a montré une activité fongicide contre *Helminthosporium solani* et *Rhizoctonia solani* tandis que l'huile de girofle a montré une activité fongicide contre divers *Phytophtora* et les fusarioses. De plus, l'huile de girofle a un effet bactéricide très marqué contre les bactéries telles que *Erwinia Carotovora* qui attaque fréquemment la pomme de terre.

Dans un mode de réalisation, le procédé comprend les applications simultanées, séparées ou étalées dans le temps auxdits bulbes et/ou tubercules :
- d'huile de girofle, et
- d'huile de menthe.
Les huiles de menthe et de girofle sont de préférence utilisées pures, c'est à dire sans ajout de solvant ou additif.

Dans un autre mode de réalisation, le procédé comprend l'application simultanée, séparée ou étalée dans le temps auxdits bulbes et/ou tubercules :
- d'eugénol, et
- de L-carvone.

Dans le procédé selon l'invention, les applications d'eugénol et/ou d'huile de girofle, et de L-carvone et/ou d'huile de menthe peuvent être simultanées.

La combinaison comprend :
- de 1 % à 99%, en poids d'eugénol, et
- de 1 % à 99% en poids de L-carvone.

Typiquement, la combinaison appliquée comprend :
- de 45% à 85% en poids d'eugénol, et
- de 15% à 55% en poids de L-carvone.

De préférence, la combinaison appliquée comprend :
- de 60% à 70% en poids d'eugénol, et
- de 30 à 40% en poids de L-carvone.

Le terme « combinaison » utilisé dans la présente demande fait référence à une application simultanée, séparée ou étalée dans le temps des ingrédients qui la constituent.

Les proportions massiques adaptées correspondantes d'huile de menthe et d'huile de girofle peuvent facilement être calculées par l'homme du métier en tenant compte des teneurs en L-carvone et en eugénol des huiles, telles que rappelées ci-dessus et/ou de la concentration des huiles à disposition.

Dans le procédé selon l'invention, on applique généralement une combinaison :
- à une première dose totale de L-carvone et d'eugénol de 35 à 120 g par tonne de bulbes et/ou tubercules, puis
- à des doses totales de L-carvone et d'eugénol de 20 à 90 g par tonne de bulbes et/ou tubercules à des fréquences comprises entre 15 et 90 jours.

La dose totale de L-carvone et d'eugénol correspond aux doses cumulées de L-carvone et d'eugénol.

Les doses adaptées correspondantes d'huile de menthe et d'huile de girofle peuvent facilement être calculées par l'homme du métier en tenant compte des teneurs en L-carvone et en eugénol des huiles, telles que rappelées ci-dessus et/ou de la concentration des huiles à disposition.

Dans le procédé selon l'invention, les applications d'eugénol et/ou d'huile de girofle, et de L-carvone et/ou d'huile de menthe peuvent également être séparées dans le temps. Chaque dose susmentionnée est alors appliquée en deux fois (eugénol puis L-carvone, ou l'inverse). Selon un mode de réalisation particulièrement avantageux, l'eugénol et/ou l'huile de girofle, et la L-carvone et/ou l'huile de menthe sont appliqués simultanément.

L'eugénol et/ou l'huile de girofle, et la L-carvone et/ou l'huile de menthe peuvent être appliqués sur les tubercules et/ou bulbes en utilisant l'une quelconque des méthodes connues dans la technique, notamment par atomisation ou thermonébulisation. De préférence, l'application est réalisée par thermonébulisation. Cette technique est connue en soi. Elle peut avantageusement être réalisée au moyen de l'Electrofog Xeda ou tout autre dispositif tel que décrit dans la demande FR 2 566 681.

Les températures adéquates de thermonébulisation sont typiquement comprises entre 170°C et 235 °C, notamment entre 190°C et 215°C. A ces températures, un brouillard de bonne qualité est obtenu (c'est-à-dire composé de particules de faible taille et de faible distribution), ce qui permet de répartir l'eugénol et/ou l'huile de girofle, et la L-carvone et/ou l'huile de menthe sur les bulbes et/ou tubercules de façon très homogène.

De préférence, les tubercules sont des pommes de terre ; les bulbes sont des oignons, de l'ail, des échalotes ou des bulbes à fleurs.

L'invention sera mieux comprise au vu des figures et exemples ci-après.

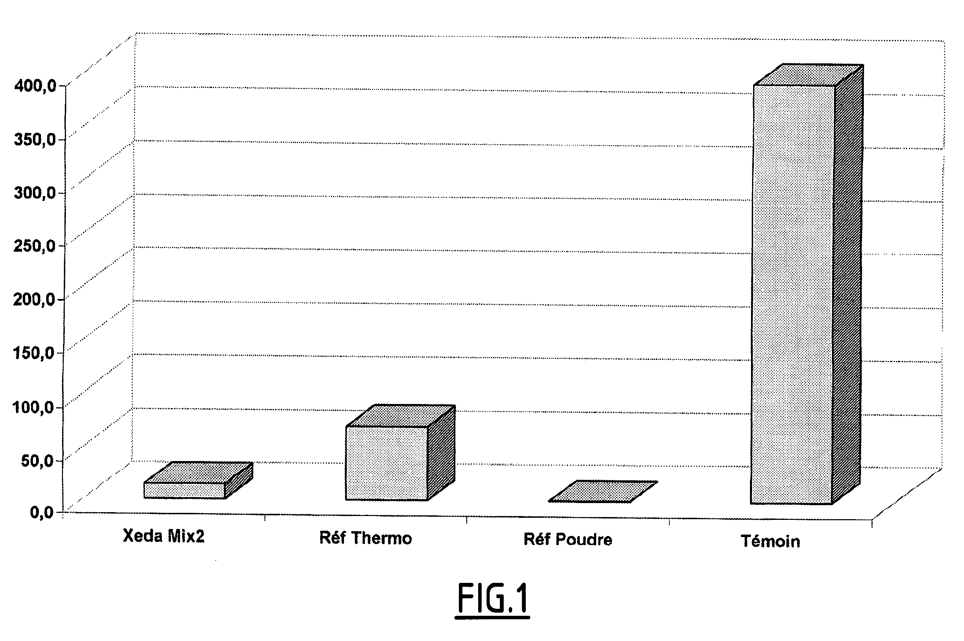

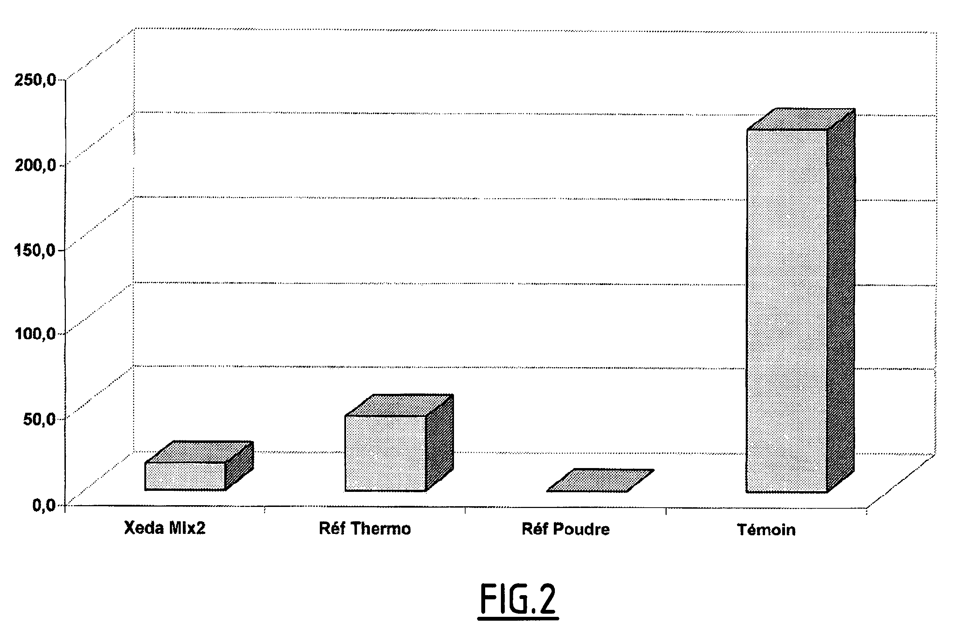

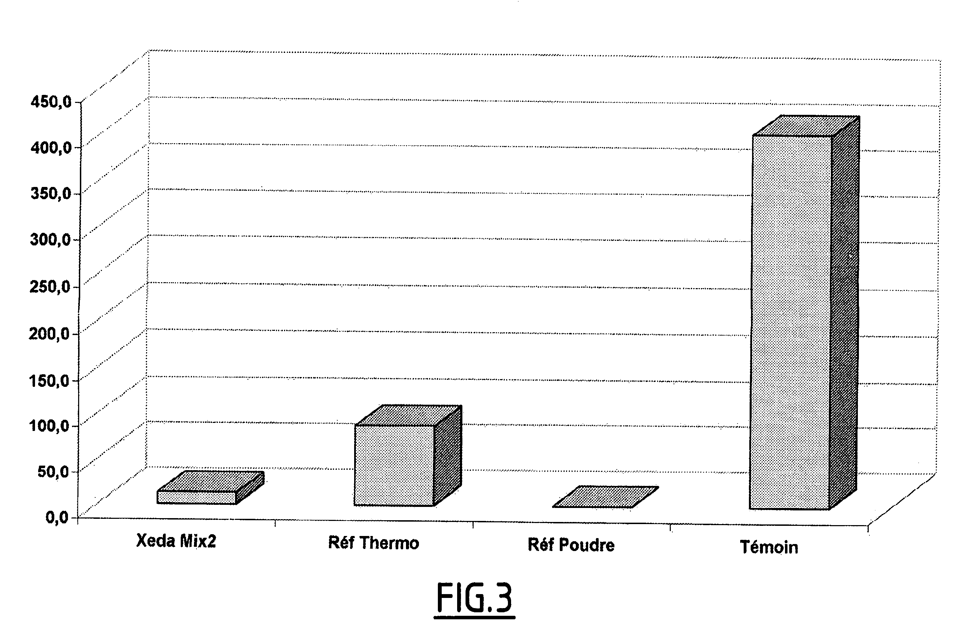

Les figures 1 à 3 représentent les poids de germes (en g de germes pour 10 kg de pommes de terre) pour des pommes de terre Bintje (figure 1), Nicola (figure 2) et Charlotte (figure 3) ayant subies les traitements anti-germinatifs de l'exemple 2 et maintenues en conservation pendant 6 mois.

### EXEMPLE 1 : Mise en évidence de l'effet synergique entre l'huile de girofle et l'huile de menthe

Les traitements anti-germinatifs ont été effectués sur une période de 6 mois.

L'huile de menthe utilisée comprenait environ 70% de L-carvone et l'huile de girofle utilisée comprenait environ 90% d'eugénol.

Les pommes de terre testées étaient des pommes de terre Bintje, Nicola et Charlotte.

Une composition antigerminative A consistant en un mélange huile de girofle (fournie par Charabot (Grasse)) / huile de menthe (fournie par Charabot (Grasse)) 2/1 v/v a été préparée. Les densités des huiles de menthe et de girofle sont respectivement de 0,94 et de 1,04 .Cette composition a été appliquée à des pommes de terre à l'aide de l'Electrofog Xeda 3000 à une température de sortie de 210 °C,
- à une première dose de 90 grammes de composition par tonne de pommes de terre,
- à des doses ultérieures de 30 grammes de composition par tonne de pommes de terre toutes les trois semaines.

Pour comparaison, des pommes de terre ont été traitées :
- B : soit par de l'huile de menthe seule
   - à une première dose de 90 grammes d'huile de menthe par tonne de pommes de terre,
   - à des doses ultérieures de 30 grammes d'huile de menthe par tonne de pommes de terre toutes les trois semaines ;
- C : soit par de l'huile de girofle seule
   - à une première dose de 90 grammes d'huile de girofle par tonne de pommes de terre,
   - à des doses ultérieures de 30 grammes d'huile de girofle par tonne de pommes de terre toutes les trois semaines ;
- D : soit par du CIPC (Xedamate Aerosol 88 contenant 20% de CIPC) par thermonébulisation :
   - à une première dose de 60 grammes de Xedamate Aerosol 88 par tonne de pommes de terre,
   - à des doses ultérieures de 30 grammes de Xedamate Aerosol 88 par tonne de pommes de terre toutes les 60 jours ;
- E : soit par du CIPC (Neoconserviet de Agriphyt) (formulation à 1% de CIPC) par poudrage à la récolte appliquée à la dose de 625 grammes par tonne de pommes de terre.

Pour référence, un stock de pommes de terre n'a pas subi de traitement anti-germinatif (F) (témoin).

Les indices de germination (en %) des pommes de terre sont regroupés dans le tableau 1 suivant .

**Tableau 1 : Poids des germes exprimés en g/10kg des pommes de terre selon la variété de pommes de terre et le traitement anti-germinatif subi.**

| **composition** | | **Poids des germes Bintje** | **Poids des germes Nicola** | **Poids des germes Charlotte** |
|---|---|---|---|---|
| **A** | **2/3 d'huile de girofle + 1/3 huile de menthe** | 14,0 | 15,0 | 13,0 |
| **B** | **huile de menthe** | 40,0 | 35,0 | 40,0 |
| **C** | **huile de girofle** | 150,0 | 130,0 | 110,0 |
| **D** | **formulation 20% CIPC** | 71,0 | 42,0 | 70,0 |
| **E** | **formulation poudre 1% CIPC** | 0,0 | 0,0 | 0,0 |
| | **Témoin** | 416,0 | 215,0 | 380,0 |

Ces résultats mettent en évidence un effet synergique lorsque l'huile de girofle et l'huile de menthe sont utilisées simultanément. La combinaison de l'huile de girofle et de l'huile de menthe permet d'éviter bien plus efficacement la germination de bulbes et de tubercules que l'huile de girofle ou que l'huile de menthe, seules.

Dans les conditions testées, la composition est environ trois fois plus efficace que la formulation de CIPC appliquée par thermonébullisation.

Les résultats sont similaires pour les trois variétés de pommes de terre testées.

### EXEMPLE 2 : Influence de la fréquence de traitement.

Les traitements anti-germinatifs ont été effectués sur une période de 6 mois.

L'huile de menthe utilisée comprenait environ 70% de L-carvone et l'huile de girofle utilisée comprenait environ 90% d'eugénol.

Les pommes de terre testées étaient des pommes de terre Bintje, Nicola et Charlotte.

Une composition antigerminative consistant en un mélange huile de girofle (fournie par Charabot (Grasse)) / huile de menthe (fournie par Charabot (Grasse)) :2/1 v/v a été préparée.

Pour réduire la fréquence des interventions mais en conservant les mêmes quantités globalement appliquées que dans l'exemple 1, la composition a été appliquée à des pommes de terre à l'aide de l'Electrofog Xeda 3000 à une température de sortie de 210 °C,
- à une première dose de 90 grammes de composition par tonne de pommes de terre,
- à des doses ultérieures de 60 grammes de composition par tonne de pommes de terre toutes les six semaines (« Xeda Mix2 » sur les figures 1 à 3).

Pour comparaison, des pommes de terre ont été traitées :
- soit par du CIPC (Xedamate Aerosol 88 contenant 20% de CIPC) par thermonébulisation :
   - à une première dose de 60 grammes de Xedamate Aerosol 88 par tonne de pommes de terre,
   - à des doses ultérieures de 30 grammes de Xedamate Aerosol 88 par tonne de pommes de terre toutes les 2 mois (« Réf Thermo» sur les figures 1 à 3) ;
- soit par du CIPC (Neoconserviet deAgriphyt) (formulation à 1% de CIPC) par poudrage appliquée à la dose de 625 grammes par tonne de pommes de terre.à la récolte (« Réf Poudre » sur les figures 1 à 3).

Pour référence, un stock de pommes de terre n'a pas subi de traitement anti-germinatif (témoin sur les figures 1 à 3)).

Les poids de germes (en g de germes pour 10 kg de pommes de terre) pour les pommes de terre sont indiqués dans les figures 1 à 3, la figure 1 correspondant à des pommes de terre Bintje, la figure 2 correspondant à des pommes de terre Nicola et la figure 3 correspondant à des pommes de terre Charlotte.

Dans les conditions testées, la composition est environ trois fois plus efficace que la formulation de CIPC appliquée par thermonébullisation.

L'effet anti-germinatif de la composition huile de girofle / huile de menthe est similaire à celui de la composition huile de girofle / huile de menthe de l'exemple 1, ce qui montre que l'augmentation de la durée entre les applications de la composition (60 jours dans l'exemple 2 et 30 jours dans l'exemple 1) n'a pas eu de conséquence.

Les résultats sont similaires pour les trois variétés de pommes de terre testées.

### EXEMPLE 3 : teneur en composition dans les pommes de terre traitées.

Les teneurs résiduelles en L-carvone (issu de l'huile de menthe) et en eugénol (issu de l'huile de girofle) de diverses variétés de pommes de terre (épluchées ou entières) traitées par la combinaison huile de girofle / huile de menthe en suivant les conditions d'application de l'exemple 2 ont été mesurées (tableau 2 : eugénol et tableau 3 : L-carvone).

**Tableau 2 : Teneur en eugénol de pommes de terre traitées par une combinaison huile de girofle / huile de menthe : 2/1 v/v**

| | Durée de traitement | Variété | Teneur en **Eugénol** (mg/Kg) |
|---|---|---|---|
| Pommes de terre entières | 6 mois | Nicola | 0,38 |
| | | Monalisa | 0,19 |
| | | Bintje | 0,40 |
| | | Charlotte | 0,32 |
| | | Agata | 0,22 |
| | | Roseval | 0,36 |
| | 9 mois | Nicola | 0,47 |
| | | Monalisa | 0,24 |
| | | Bintje | 0,28 |
| | | Agata | 0,37 |
| Pommes de terre épluchés | 6 mois | Nicola | 0,03 |
| | | Monalisa | < 0,02 |
| | | Bintje | < 0,02 |
| | | Charlotte | < 0,02 |
| | | Agata | < 0,02 |
| | | Roseval | < 0,02 |
| | 9 mois | Nicola | < 0,02 |
| | | Monalisa | < 0,02 |
| | | Bintje | < 0,02 |
| | | Agata | < 0,02 |

**Tableau 2 : Teneur en L-carvone de pommes de terre traitées par une combinaison huile de girofle / huile de menthe : 2/1 v/v**

| | Durée de traitement | Variété | Teneur en **L-carvone** (mg/Kg) |
|---|---|---|---|
| Pommes de terre entières | 6 mois | Nicola | 0,20 |
| | | Monalisa | 0,16 |
| | | Bintje | 0,34 |
| | | Charlotte | 0,18 |
| | | Agata | 0,23 |
| | | Roseval | 0,317 |
| | 9 mois | Nicola | 0,16 |
| | | Monalisa | 0,23 |
| | | Bintje | 0,07 |
| | | Agata | 0,09 |
| Pommes de terre épluchés | 6 mois | Nicola | < 0,02 |
| | | Monalisa | < 0,02 |
| | | Bintje | < 0,02 |
| | | Charlotte | < 0,02 |
| | | Agata | < 0,02 |
| | | Roseval | < 0,02 |
| | 9 mois | Nicola | 0,02 |
| | | Monalisa | < 0,02 |
| | | Bintje | < 0,02 |
| | | Agata | < 0,02 |

## Revendications

1. Procédé de traitement antigerminatif et de bulbes et/ou tubercules comprenant les applications simultanées, séparées ou étalées dans le temps auxdits bulbes et/ou tubercules d'une combinaison:
- d'eugénol et/ou d'huile de girofle, et
- de L-carvone et/ou d'huile de menthe,
ladite combinaison comprenant :
- de 1 % à 99%, en poids d'eugénol, et
- de 1 % à 99% en poids de L-carvone.

2. Procédé selon la revendication 1, dans lequel la combinaison appliquée comprend :
- de 45% à 85% en poids d'eugénol, et
- de 15% à 55% en poids de L-carvone.

3. Procédé selon la revendication 2, dans lequel la combinaison appliquée comprend :
- de 60% à 70% en poids d'eugénol, et
- de 30% à 40 % en poids de L-carvone.

4. Procédé selon l'une quelconque des revendications 1 à 3, dans lequel on applique une combinaison :
- à une première dose totale de L-carvone et d'eugénol de 35 à 120 g par tonne de bulbes et/ou tubercules, puis
- à des doses totales de L-carvone et d'eugénol de 20 à 90 g par tonne de bulbes et/ou tubercules à des fréquences comprises entre 15 et 90 jours.

5. Procédé selon l'une quelconque des revendications 1 à 4, dans lequel les applications sont réalisées par thermonébulisation.

6. Procédé selon la revendication 5, dans lequel la thermonébulisation est réalisée à une température comprise entre 170°C et 235°C.

7. Procédé selon la revendication 6, dans lequel la thermonébulisation est réalisée à une température comprise entre 190°C et 215°C.

8. Procédé selon l'une quelconque des revendications 1 à 7, dans lequel les tubercules sont des pommes de terre et les bulbes sont des oignons, de l'ail, des échalotes ou des bulbes à fleurs.

9. Procédé selon l'une quelconque des revendications précédentes, tel que ledit procédé antigerminatif exerce un traitement fongicide additionnel.

## Patentansprüche

1. Verfahren für die Antikeimungsbehandlung von Zwiebelknollen und/oder Wurzelknollen, umfassend das gleichzeitige, getrennte oder über die Zeit verteilte Aufbringen einer Kombination von:
- Eugenol und/oder Nelkenöl und
- L-Carvon und/oder Minzöl,
auf die Zwiebeln und/oder Wurzelknollen, wobei die Kombination
- 1 Gew.-% bis 99 Gew.-% Eugenol und
- 1 Gew.-% bis 99 Gew.-% L-Carvon
umfasst.

2. Verfahren gemäß Anspruch 1, wobei die aufgebrachte Kombination
- 45 Gew.-% bis 85 Gew.-% Eugenol und
- 15 Gew.-% bis 55 Gew.-% L-Carvon
umfasst.

3. Verfahren gemäß Anspruch 2, wobei die aufgebrachte Kombination
- 60 Gew.-% bis 70 Gew.-% Eugenol und
- 30 Gew.-% bis 40 Gew.-% L-Carvon umfasst.

4. Verfahren gemäß irgendeinem der Ansprüche 1 bis 3, wobei eine Kombination
- mit einer ersten Gesamtdosis L-Carvon und Eugenol von 35 bis 120 g pro Tonne Zwiebelknollen und/oder Wurzelknollen, und anschließend
- mit Gesamtdosen L-Carvon und Eugenol von 20 bis 90 g pro Tonne Zwiebelknollen und/oder Wurzelknollen mit Häufigkeiten zwischen 15 und 90 Tagen
aufgebracht wird.

5. Verfahren gemäß irgendeinem der Ansprüche 1 bis 4, wobei die Anwendungen mittels Thermovernebelung durchgeführt werden.

6. Verfahren gemäß Anspruch 5, wobei die Thermovernebelung bei einer Temperatur von zwischen 170°C und 235°C durchgeführt wird.

7. Verfahren gemäß Anspruch 6, wobei die Thermovernebelung bei einer Temperatur von zwischen 190°C und 215°C durchgeführt wird.

8. Verfahren gemäß irgendeinem der Ansprüche 1 bis 7, wobei die Wurzelknollen Kartoffeln sind und die Zwiebelknollen Zwiebeln, Knoblauch, Schalotten oder Blumenzwiebeln sind.

9. Verfahren gemäß irgendeinem der vorhergehenden Ansprüche, derart, dass das Antikeimungsverfahren eine zusätzliche Fungizidbehandlung durchführt.

## Claims

1. A method for anti-sprouting treatment of bulbs and/or tubers, comprising simultaneous, separate or sequential applications to the said bulbs and /or tubers of a combination of:
- eugenol and/or clove oil, and
- L-carvone and/or mint oil,
the said combination comprising :
- from 1 % to 99 % by weight of eugenol, and
- from 1 % to 99 % by weight of L-carvone.

2. The method according to claim 1 wherein the applied combination comprises:
- from 45 % to 85 % by weight of eugenol, and
- from 15 % to 55 % by weight of L-carvone.

3. The method according to claim 2 wherein the applied combination comprises:
- from 60 % to 70 % by weight of eugenol, and
- from 30 % to 40 % by weight of L-carvone.

4. The method according to any of claims 1 to 3 wherein a combination is applied:
- at an initial total dose of L-carvone and eugenol of 35 to 120 g per tonne of bulbs and/or tubers, then
- at total doses of L-carvone and eugenol of 20 to 90 g per tonne of bulbs and/or tubers at frequencies of between 15 and 90 days.

5. The method according to any of claims 1 to 4 wherein the applications are carried out by thermal fogging.

6. The method according to claim 5 wherein thermal fogging is conducted at a temperature of between 170°C and 235°C.

7. The method according to claim 6 wherein thermal fogging is conducted at a temperature of between 190°C and 215°C.

8. The method according to any of claims 1 to 7 wherein the tubers are potatoes and the bulbs are onions, garlic, shallots or flower bulbs.

9. The method according to any of the preceding claims such that the said anti-sprouting treatment additionally allows fungicidal treatment.
